# EUROPEAN PATENT SPECIFICATION

(11) **EP 4 205 528 B1**
(45) Date of publication and mention of the grant of the patent: **14.10.2026**
(21) Application number: 22150134.9
(22) Date of filing: 04.01.2022
(51) Int. Cl.: A01D 41/14, A01D 61/00, A01D 41/127

(54) **CONTROLLING HARVESTING PARAMETERS ON A HEADER OF A COMBINE**
STEUERUNG DER ERNTEPARAMETER AUF EINEM ERNTEVORSATZ EINES MÄHDRESCHERS
COMMANDE DES PARAMÈTRES DE RÉCOLTE D'UNE UNITÉ DE RÉCOLTE D'UNE MOISSONNEUSE-BATTEUSE

(43) Date of publication of application: 05.07.2023
(73) Proprietor: CNH Industrial Belgium N.V., 8210 Zedelgem (BE)
(72) Inventor: LENAERTS, Bart, 3001 Heverlee (BE); MISSOTTEN, Bart, 3020 Herent (BE); JONGMANS, Dré, 4791 AG Klundert (NL); VAN SOOM, Bertram, 3010 Kessel-Lo (BE); LEROY, Dirk, 3370 Boutersem (BE)
(74) Representative: CNH Industrial IP Department

(56) References cited:
- EP-A1- 3 552 473
- DE-A1- 102015 113 527
- US-A1- 2019 343 044
- US-A1- 2020 100 428
- US-A1- 2021 015 040

## Description

### FIELD OF THE INVENTION

The present invention relates to a method for automatically controlling harvesting parameters on a header of a combine harvester.

### BACKGROUND OF THE INVENTION

Agricultural combine harvesters are used in the harvesting of crop such as grain and other plants which are grown on a field. Combine harvesters are self-driven vehicles and comprise a header which cuts the crop to be harvested and transports the crop to a feeder. The feeder is usually an inclined conveyor configured to transport the crop to a processing device for threshing and separating. The threshed and separated crop is then cleaned in a cleaning device and deposited in a tank from which it can be unloaded to a transport vehicle.

In order to increase the amount of crop cut by the header and thus the overall productivity of the combine harvester the width of the header can be very large. Furthermore, the forward speed of the combine harvester may be increased significantly for this purpose. Therefore, a considerable amount of cut crop is first transported transversely to the driving and harvesting direction of the combine harvester before it can be transferred into the feeder. Both transport mechanisms require relatively high speeds and a continuous movement in order to optimize the harvesting process. Also, there is a significant change of the transporting direction on the header: from transverse to parallel with respect to the driving direction of the combine harvester. In this process, the varying characteristics of the crop have an influence on how, where and at what speed the crop material is transported on the header, from there into the feeder and further upstream.

For an operator it is rather difficult to monitor the crop intake process chain and to keep an even distribution of the crop material on the header. This is due to the often poor visibility created by dust during the harvesting process and also due to the fact that harvesting conditions can vary very quickly. Also, stopping the combine and making manual adjustments is time consuming and labor intensive.

Several approaches have been chosen to adjust the working parameters of an agricultural combine harvester such as the ground speed, the cutting height of the header, the turning speed of the reel and the processing speed of the threshing device. For example, EP 2 681 984 A1 discloses a height control of the reel based on a sensed height and a target height of the reel. DE 10 2017 208 442 A1 describes a modification of such a control system using a camera on the cabin of the combine sensing the height of the crop to be harvested and forwarding the detected signals to a control unit running an adjustment algorithm which can be modified by the operator. Other disclosures such as DE 43 11 054 A1 and EP 1 266 558 A2 aim at measuring the amount of crop directly in the feeder and thus controlling the forward speed of the combine harvester based on the measured signal. EP 3 527 059 A1 and EP 3 753 391 A1 disclose improvements to measurement devices directly in or at the feeder channel. EP 2 143 316 B1 describes a combine harvester having a camera on the driver cabin for monitoring the crop flow in the header to determine by image detection potentially harmful subjects before entering. US 2020/100428 A1 discloses a combine harvester comprising a moisture sensor within a feeder, wherein the sensor signal of the moisture sensor is processed by the control unit in order to compensate measurements of other sensors arranged on a header of the combine harvester.

Most of the existing technical solutions have a number of disadvantages. Some are quite complex in structure and some are not sufficiently accurate in their result.

It is therefore the object of the present invention to provide a method for automatically controlling a harvesting parameter on the header of a combine harvester which ensures an even distribution of crop in the feeder and thus increases the overall productivity of the combine harvester.

This object is achieved by the features according to claim 1. Preferred embodiments are described in the dependent claims.

### SUMMARY OF THE INVENTION

According to the invention, a method for automatically controlling a harvesting parameter on a header of a combine harvester the combine harvester further having a feeder and a downstream processing device wherein crop of a harvest plant is cut by the header, transferred to the feeder within the header and then transported to the processing device, comprises the steps of providing at least one sensor for detecting at least one crop property while the crop is in the feeder, each sensor being configured for outputting at least one crop property signal; providing at least one actuator on the combine harvester; providing a control unit for receiving and processing the at least one crop property signal, and for transmitting at least one control signal to the at least one actuator; detecting at least one crop property in the feeder by the at least one sensor and outputting at least one corresponding crop property signal to the control unit; processing the at least one crop property signal in the control unit; transmitting at least one control signal from the control unit to the at least one actuator; and executing the at least one control signal in the at least one actuator so as to automatically control the harvesting parameter on the header. The at least one crop property may be selected from the group consisting of: thickness distribution of the crop layer across a cross-section of the feeder, and density distribution of the crop layer across the cross-section of the feeder, wherein any of the above crop properties is detectable by said at least one sensor. The processing step in the control unit further includes comparing the thickness and/or density distribution of the crop layer across a width of the feeder (Wf) with a target thickness or density distribution.

In preferred embodiments, further crop properties than above mentioned may also be relevant as long as they influence the crop flow within the feeder, i.e. as long as they contribute to a more or less constant crop flow from the feeder to the processing device within the combine harvester.

Such an automated control of the header significantly increases the overall productivity of the combine harvester, reduces manual intervention of the operator to a minimum and helps to avoid damages. It also enables a more accurate adaptability to changing harvesting conditions. The inventive method achieves a more constant and high-volume crop transportation through the header and the feeder even for very wide headers and high ground speeds of the combine harvester. While the crop property is measured in the feeder in order to ensure a smooth and constant crop flow towards the processing device, i.e. the threshing and separation mechanism, the automated control with the feedback loop of signals provides a processing of the sensed, estimated and stored data so as to control parameters effected by actuators on or around the header. In other words, the automated header control in fact leads to an even, smooth, high-volume and possibly constant crop flow within the feeder which is located downstream of the header portions. The used sensors may be of mechanical, ultrasonic, radar, electrical, electro-mechanic, hydraulic, pneumatic or optical nature and may be located on the combine, for example on the feeder.

In preferred embodiments, the processing step in the control unit may include comparing the detected at least one crop property signal with an upper and/or lower threshold for the respective crop property. This may in some cases include providing an indication of the at least one crop property signal to an operator by the control unit. In addition to the automated control, an indication to the operator may prove very helpful because the operator can monitor and possibly initiate other measures directly on the combine harvester and beyond.

The processing step in the control unit may further include comparing a detected thickness or density with a target thickness or density. The target thickness and the target density distribution of the crop moving in the feeder, i.e. the parameters for an optimal harvesting result, are dependent on several factors like the type of crop, the temperature, the humidity and other parameters and may be stored in a respective memory of the control unit or, alternatively, input by an operator into the control unit. Preferably, the target density distribution may be constant over the width of the feeder and proportional to a crop intake at the header. The results of the performed comparison between the actual and the target value of the respective crop property may be converted by the control unit into corresponding correction signals for the actuators on the header such that, for example, a closed loop control may be achieved.

In preferred embodiments the executing step on the at least one actuator on the header includes at least one operation of the group consisting of adjusting an auger speed or a belt speed relating to the movement of the crop on the header transverse to the driving direction of the combine harvester; adjusting the clearance of a stripper plate; adjusting the position of a crop guiding plate; adjusting a feeder opening; and adjusting a belt speed relating to the longitudinal movement of the crop from the header into the feeder. An actuator in this regard may be a motor, belt drive, a valve or any other controllable device which is able to influence the flow of crop on or near the header. Examples for such controllable devices on or near the header are but are not limited to: auger, conveyor belt, belt drive, cutter bar, guiding plate, reel, stripper plate, and feeder opening. The actuators may change the speed, position or pressure or a respective device so that a modification in crop flow is effected.

Advantageously, an adjusting operation may be executed at least partially on the right side and/or on the left side of the header. For example, some actuators on the right side of the header may be changed to increase the crop flow from the right side, and some actuators on the left side may be changed to decrease the crop flow from the left side, or vice versa. Other combinations of actuator effects are also possible such that in the end the objective of an even, fast and smooth crop flow in the feeder can be achieved in an automated fashion.

In further beneficial embodiments the method may comprise before the processing step in the control unit estimating a crop intake distribution over the width of the header on the basis of data collected by a forward looking sensor such as one or more of a camera, a radar sensor and a lidar sensor, and/or on the basis of a position of the combine harvester and satellite info and/or on the basis of geographic information about a current harvested area and a non-harvested area. Such additional estimated information about the crop to be harvested directly in front of the header may provide data which may be used in the automation algorithm of the control unit. For example, a major decrease of crop to be harvested on one side of the header which has been detected by a camera on the cabin of the combine may lead to less abrupt changes in the feeder crop flow. Respective actuator parameters may thus be changed in advance in order to account for such rapid changes which have not yet been detected inside the feeder. In other words, the additional estimated information provides a further input for the algorithm in the control unit.

In embodiments, the processing in the control unit may comprise estimating a target distribution of the thickness and/or density of the crop layer over the width of the feeder based on the estimated crop intake distribution over the width of the header. Advantageously, the target distribution of the thickness and/or the density of the crop layer over the width of the feeder may be estimated using a mathematical and/or experimental model of the crop flow in the header to the feeder. According to preferred embodiments, the target distribution of the thickness and/or density of the crop layer over the width of the feeder may be estimated based on data of previously measured distributions of thickness and/or density of the crop layer over the width of the feeder. According to specific embodiments, the processing step in the control unit may include comparing the thickness and/or density distribution of the crop layer across a width of the feeder with the target distribution.

Thus, in addition to the actual estimated data and the current crop thickness or crop distribution over the width of the feeder, the algorithm for the control of the at least one actuator may be supplemented by a mathematical and/or experimental model and/or previously stored thickness or distribution data. This will provide a more precise and more flexible automated control algorithm.

In preferred embodiments, the method may comprise monitoring the executing step on the at least one actuator on the header by detecting at least one actuator property by an actuator sensor and outputting at least one actuator property signal to the control unit. Such monitoring may ensure that the control signals are executed accordingly and correctly. It will further increase the accuracy of the overall method.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: illustrates a side view of an exemplary embodiment of a combine harvester having a header in which an embodiment of the method according to the invention may be executed;
- Fig. 2: shows a perspective view of an auger type header in which an embodiment of the method according to the invention may be executed;
- Fig. 3: shows a top view of a draper type header in which an embodiment of the method according to the invention may be executed; and
- Figs. 4: and 5 show a front view of a feeder as a detail of a combine harvester in which an embodiment of the method according to the invention may be executed.

### DETAILED DESCRIPTION OF EMBODIMENTS

The terms "grain", "straw" and "tailings" are used principally throughout this specification for convenience, but it is to be understood that these terms are not intended to be limiting. Thus "grain" refers to that part of the crop material which is threshed and separated from the discardable part of the crop material, which is referred to as non-grain crop material, MOG, or straw. Incompletely threshed crop material is referred to as "tailings". Also, the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting. The terms "downstream" and "upstream" are determined with reference to the intended direction of crop material flow during operation, with "downstream" being analogous to "rearward" and "upstream" being analogous to "forward."

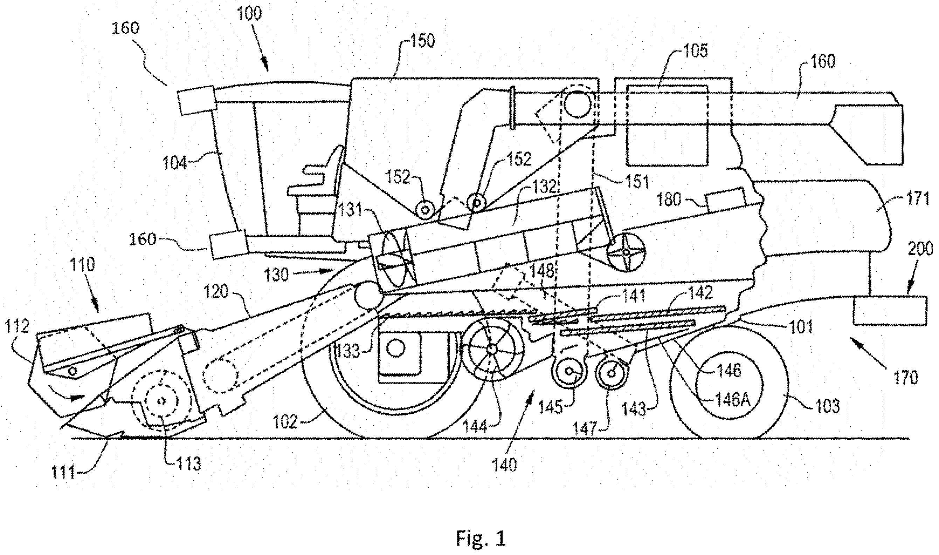

Referring now to the drawings, and more particularly to Fig. 1, there is shown an embodiment of an agricultural harvester 100 in the form of a combine which generally may include a chassis 101, ground engaging wheels 102 and 103, header 110, feeder housing 120, operator cab 104, threshing and separating system 130, cleaning system 140, grain tank 150, and unloading conveyance 160. A central control unit (not shown) may be provided, usually near the operator cab 104, which is configured to be connected to all sensors, actuators, systems, and operator interfaces such that all functions of the combine harvester may be controlled from the operator and/or automatically. Front wheels 102 can be larger flotation type wheels, and rear wheels 103 smaller steerable wheels. Motive force may be selectively applied to front wheels 102 through a power plant in the form of a diesel engine 105 and a transmission (not shown). Although combine 100 is shown as including wheels, it is also to be understood that combine 100 may include tracks, such as full tracks or half tracks.

Header 110 is mounted to the front of combine 100 and includes a cutter bar 111 for severing crops from a field during forward motion of combine 100. A rotatable reel 112 directs the crop onto header 110, and a double auger 113 feeds the severed crop laterally inwardly from each side toward feeder housing 120. Feeder housing 120 conveys the cut crop to threshing and separating system 130, and is selectively vertically movable using appropriate actuators, such as hydraulic cylinders (not shown).

Threshing and separating system 130 of the combine 100 as shown in Fig.1 is of the axial-flow type, and generally includes a threshing rotor 131 at least partially enclosed by a rotor cage and rotatable within a corresponding perforated concave 132. The cut crops are threshed and separated by the rotation of rotor 131 within concave 132, and larger elements, such as stalks, leaves and the like are discharged from the rear of combine 100. Smaller elements of crop material including grain and non-grain crop material, including particles lighter than grain, such as chaff, dust, and straw, are discharged through perforations of concave 132. Threshing and separating system 130 can also be a different type of system, such as a system with a transverse threshing rotor rather than an axial threshing rotor, more than one threshing rotor, etc.

Grain which has been separated by the threshing and separating assembly 130 falls onto a grain pan 133 and is conveyed toward cleaning system 140. Cleaning system 140 may include an optional pre-cleaning sieve 141, an upper sieve 142 (also known as a chaffer sieve or sieve assembly), a lower sieve 143 (also known as a cleaning sieve), and a cleaning fan 144. Grain on sieves 141, 142 and 143 is subjected to a cleaning action by fan 144 which provides an air flow through the sieves to remove chaff and other impurities such as dust from the grain by making this material airborne for discharge from a straw hood 171 of a residue management system 170 of combine 100. Optionally, the chaff and/or straw can proceed through a chopper 180 to be further processed into even smaller particles before discharged out of the combine 100 by a spreader assembly 200. It should be appreciated that the "chopper" 180 referenced herein, which may include knives, may also be what is typically referred to as a "beater", which may include flails, or other construction and that the term "chopper" as used herein refers to any construction which can reduce the particle size of entering crop material by various actions including chopping, flailing, etc. Grain pan 133 and pre-cleaning sieve 141 oscillate in a fore-to-aft manner to transport the grain and finer non-grain crop material to the upper surface of upper sieve 142. Upper sieve 142 and lower sieve 143 are vertically arranged relative to each other, and likewise oscillate in a fore-to-aft manner to spread the grain across sieves 142, 143, while permitting the passage of cleaned grain by gravity through the openings of sieves 142, 143.

Clean grain falls to a clean grain auger 145 positioned crosswise below and toward the front of lower sieve 143. Clean grain auger 145 receives clean grain from each sieve 142, 143 and from a pan 146A of cleaning system 140. Clean grain auger 145 conveys the clean grain laterally to a generally vertically arranged grain elevator 151 for transport to grain tank 150. Tailings from cleaning system 140 fall to another pan 146 and a tailings auger trough 147. The tailings are transported via tailings auger 147 and return auger 148 to the upstream end of cleaning system 140 for repeated cleaning action. A pair of grain tank augers 152 at the bottom of grain tank 150 convey the clean grain laterally within grain tank 150 to unloader 160 for discharge from combine 100. Located on or around operator cab 104 may be a camera 160 or other forward-looking sensor such as a radar sensor or a lidar sensor which may detect image data so that the crop intake distribution over the width of the header may be estimated.

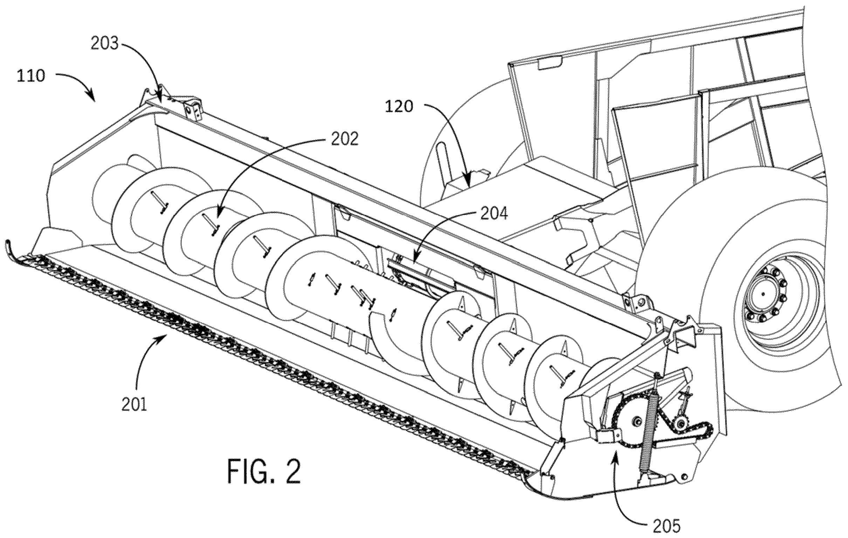

Fig. 2 is a detailed perspective view of header 110 of the auger type which may include a housing 203 supporting a cutter bar 201 for cutting crop above the earth, and having an opening 204 at the feeder housing 120 for feeding the cut crop into the feeder housing 120. The shape of the opening 204 may be substantially rectangular in cross-section. Header 110 may also include auger 202 mounted within header housing 203 on respective ends. At least one end of auger 202 may be mechanically connected to drive train 205. During operation, drive train 205 rotates auger 202 such that auger 202 pulls the cut crop from cutter bar 201 and feeds the cut crop into feeder housing opening 204 for further processing. Drive train 205 may include a geared mechanism that is driven by at least one of an internal combustion engine (not shown) of the combine, a hydraulic motor (not shown), an electric motor (not shown), or the like. In the embodiment of Fig. 2 the header comprises a number of actuators which may receive control signals from the control unit such that the harvesting parameter(s) on the header may be automatically controlled. Possible examples of such actuators are the drive train 205 of the auger 202, i.e. the auger drive speed, the drive of the cutter bar 201, i.e. the cutter bar drive speed, the drive for controlling the height of the cutter bar 201, the drive for the reel (not shown in Fig. 2), i.e. the reel drive speed and reel height, and other possible drives located close to the feeder housing opening 204 which are configured for transporting the cut crop into the feeder housing substantially in the driving direction. Alternatively, to the auger 202 shown in the embodiment, the auger may be divided into a left auger component and a right auger component each driven by separate drivetrains so that differing crop distributions on the right or left side detected by one of the image sensors or other sensors may be transported at different speeds.

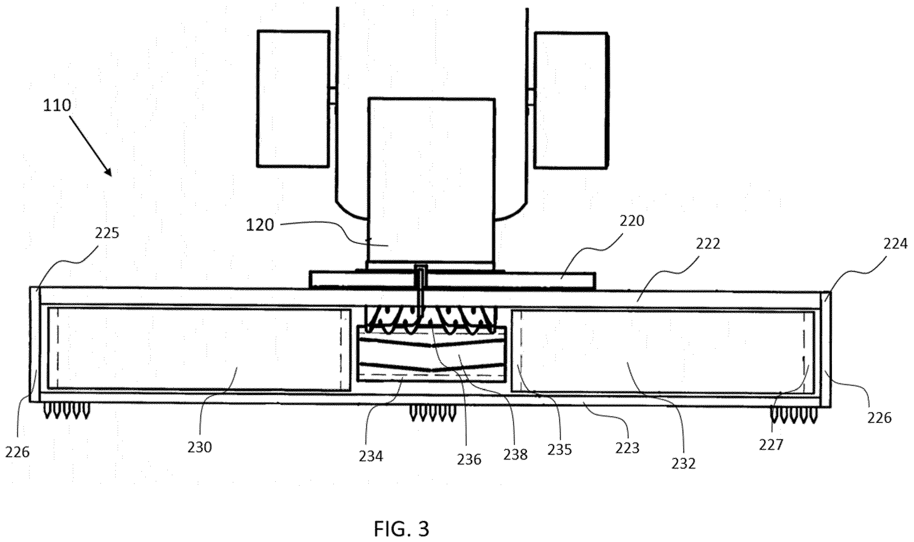

Shown in Fig. 3 is an alternative embodiment for header 110: instead of an auger type header as in Fig. 2, Fig. 3 depicts a draper header. Header 110 may comprise a main frame 222 including a horizontal main support beam extending along the length of the header along a first end 225 to a second end 224 of the header 110. The main frame 222 may include forwardly extending frame members 226 at the ends 224, 225 of the header together with similarly arranged frame members intermediate the width of the header. At the front end of the frame members 226 there may be mounted a cutter bar 223 which carries a sickle knife construction of a conventional nature. The frame 222 may be attached to an adapter structure 220 configured to be attached to the feeder housing 120 of the combine harvester.

The header 110 may include a crop transportation system for transferring the crop from the cutter bar to the feeder housing 120. This may include two draper belts 230 and 232 each of which may comprise a canvas extending from an outer guide roller 227 to an inner guide roller 235 so as to define an upper run of the canvas which carries the crop inwardly toward the center of the header 110. The canvas of the draper belts 230 and 232 may carry a plurality of transverse slats (not shown).

At the center of the header 110 there may be provided an infeed draper belt 238 which has a front roller 234 just behind the cutter bar 223 and a rear roller 236 thus defining an upper run of the canvas which carries the crop rearwardly toward the feeder housing 120. The infeed draper belt 238 may also carry slats (not shown).

In a similar fashion as explained for the auger header depicted in Fig. 2, the draper header according to the embodiment of Fig. 3 comprises a number of actuators which are configured to be controlled by a central control unit of the combine harvester. These actuators may include a drive of the cutter bar 223 wherein the speed of the cutter bar knife movement may be controlled, a drive for the left and right draper belts 230, 232 which are separately controllable in their speed so that different amounts of crop may be transported from the outer sides to the feed draper 238 located at the center of the draper header 110. Further actuators on the draper header 110 may include the drive of the infeed draper belt 238 and the drives of the front roller 234 and rear roller 236, wherein each of these drives is controllable in speed. Furthermore, the reel (not shown) may also comprise a drive which may be controlled in speed, and in addition the height of the reel may be set by a drive which is controllable by the control unit of the combine harvester. It should further be noted that the header on a combine harvester configured to perform the method according to the invention may be a combination of both mentioned types, i.e. it may comprise combinations of features of an auger type header and of a draper type header to ensure an optimized intake of crop from all areas of a header into the feeder housing at the center of the header.

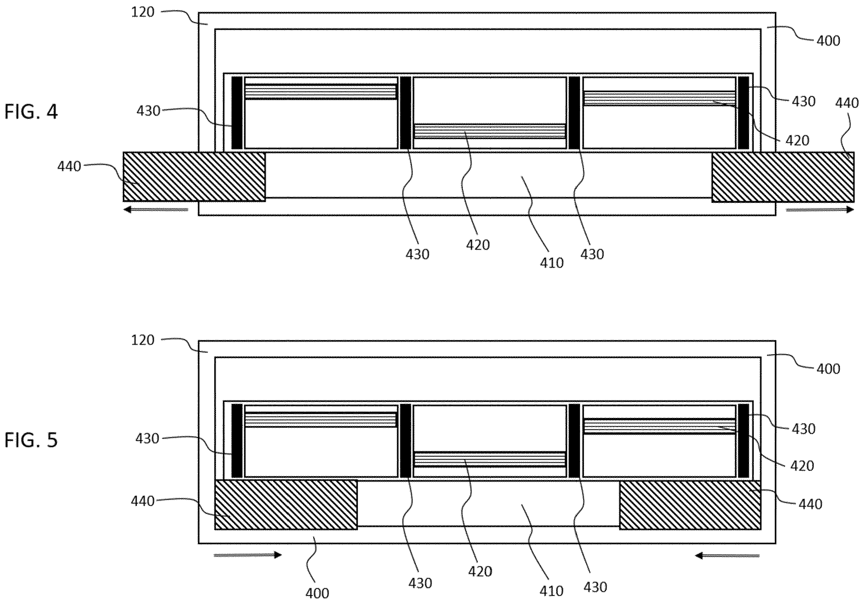

Figs. 4 and 5 shows a front view of a feeder housing 120 configured for performing an embodiment of the method according to the invention. The feeder housing 120 may include a substantially rectangular feeder frame 400 comprising and enclosing a feeder opening 410. The feeder opening 410 includes in the shown embodiment a feeding mechanism which may be comprised of four feeder chains 430 running substantially perpendicular to the drawing plane of Figs. 4 and 5 wherein a number of parallel feeder slats 420 are each attached between two feeder chains 430. Crop material entering the feeder opening 410 is transported perpendicular to the drawing plane by the movement of the feeder slats 420, as can be seen in the respective portion of Fig. 1 showing the feeder housing 120. The feeder slats 420 compress the crop material which is pushed onto the bottom plate of the feeder frame 400 and thus transported away from the feeder opening 410 into the direction towards the processing device.

The crop distribution inside the feeder is crucial for the subsequent processing and thus the overall harvesting productivity of the combine harvester. It is essential that the crop properties inside the feeder be as smooth and even as possible such that the feeding speed can be optimized to the processing speed of the threshing and separating assembly. In order to further control the crop intake of the feeder opening 410, sliding plates 440 may be provided on both sides of the feeder opening 410 opposing each other. The sliding plates 440 may be horizontally moveable in order to control and adjust the cross-sectional area of the feeder opening 410, as is indicated by the arrows below each of the sliding plates 440. In Fig. 4 the sliding plates 440 are in a position towards full enlargement of the feeder opening 410. In Fig. 5 the sliding plates 440 are in a position significantly reducing the area of the feeder opening 410. It should be noted that the sliding plates 440 may be individually moveable by singular drives or, alternatively, in parallel by a common drive. This facilitates a very flexible control of the cross-sectional area of the feeder opening 410 by the control unit in that the operation of the actuators on the header have a direct influence on the conditions within the feeder housing 120.

In order to ensure an optimal performance of the method according to the invention, a number of sensors must be provided, preferably within and/or on the feeder housing so as to detect at least one crop property while the crop is in the feeder. Each sensor shall be configured for outputting at least one crop property signal. The crop properties to be measured by the sensors may be selected from the not limited group comprising, for example: thickness and/or thickness distribution of the crop layer across a cross-section of the feeder, density and/or density distribution of the crop layer across the cross-section of the feeder and humidity of the crop. According to the invention, the sensors which are preferably be provided in and on the feeder housing are configured to detect one or more of the above listed crop properties.

The sensors may include optical/image sensors, mechanical sensors, temperature sensors, electrical sensors, electromechanical sensors, force sensors, acoustic sensors, moisture sensors, magnetic sensors, pressure sensors and other sensors configured for detecting the above mentioned crop properties.

According to one embodiment, the method according to the invention may be performed along the following lines.

Firstly, the thickness distribution of the crop layer over the width of the feeder is measured by at least one sensor within and/or on the feeder housing as a function f(x) wherein x is a variable representing the horizontal distance from one side of the feeder housing to the other side with the origin of the coordinates in the middle of the feeder opening: $f \left(x\right) with - Wf / 2 < x < Wf / 2$ with Wf being the full width of the feeder

Then, the measured thickness distribution f(x) is compared with a target distribution function F(x): $F \left(x\right) with - Wf / 2 < x < Wf / 2$ with Wf being the full width of the feeder

If the difference between the measured distribution function f(x) and the target distribution function F(x) for a certain x value exceeds a predetermined threshold, the control unit issues a corresponding control signal in order to adjust at least one of the actuators on the header such that the above difference is minimized. This could be done by sending control signals from the control unit to the respective actuators in order to adjust the speed of the (transverse) belts (in case of a draper header), the auger speed, clearance stripper plates (in case of an auger header), the size or area of the feeder opening, i.e. width, shape, position of sliding plates on the side of the feeder opening, speed (longitudinal) belt in front of the feeder.

In particular, when the difference between the measured distribution and the target distribution on the left side exceeds a predetermined threshold, the control signals are especially directed to the actuator(s) on the left side of the header; and when the difference between the measured distribution and the target distribution on the right side exceeds a predetermined threshold, the control signals are especially directed to the actuator(s) on the right side of the header. Of course, other configurations are possible depending on the effect of the operation of each single actuator.

Instead of evaluating if the difference between the measured distribution f(x) and the target distribution F(x) exceeds a predetermined threshold for a certain value of x, so evaluating a local difference, the difference between the measured distribution and the target distribution can also be evaluated as a total difference, so over the width of the feeder, for example by integrating the absolute value of the difference over the width of the feeder, and comparing it with a predetermined threshold. A weighing function can be used to give a higher weight to the difference in a certain zone, for example when it's known that a difference in that zone has more effect on the subsequent processing.

In particular embodiments, if the local difference or total difference is below or above a certain threshold, the control unit issues a warning signal to the operator of the combine to warn about a local or total feeding issue. Likewise, if the local or total difference is below or above a certain threshold for a time longer than a certain predetermined time, a warning signal is issued to the operator of the combine to warn about a local or total feeding issue. Such local or total feeding issue can be, for example: knife breakage, blockage, bulldozing crop, etc.

In particular embodiments, the thickness target distribution for the crop layer in the feeder is determined as being constant over the width. F(x) at time T is then determined by estimating the total crop intake as cut at the front of the header at time T - ΔT, whereby ΔT is the average time it takes for crop to travel after being cut by the header into the feeder. ΔT can be determined by experiments and will typically be depending on operating parameters of the header. The constant thickness target distribution F(x) is then calculated by multiplying the total crop intake as cut at the front of the header with a factor which takes into account that the crop flow is squeezed over the width as it passes from the header to the feeder, and possibly also squeeze over the thickness as it gets compressed in the feeder. This factor can be determined by experiments.

In particular embodiments, the thickness target distribution for the crop layer in the feeder is determined as being depending on x. F(x) at time T is then determined by estimating the crop intake at the front of the header in position x / Wf * Wh, whereby : Wh = width of the header, at time T - ΔTx wherein ΔTx is the time to travel from intake position x / Wf *Wh to feeder position x. ΔTx can be determined by experiments, for example by painting a narrow strip of crop transverse to the driving direction of the combine and monitoring the flow of the painted crop.

In particular embodiments, the crop intake is estimated by quantifying the standing crop just in front of the header, for example by one or more forward looking sensors (camera, radar, lidar) and/or satellite info, and taking into account the header width and combine forward speed.

In particular embodiments, the thickness target distribution for the crop layer in the feeder is determined by doing multiple experiments whereby the crop intake distribution at the front of the header is estimated over the width of the header, and the thickness distribution of the crop layer in the feeder is measured. By using various techniques, including but not limited to signal processing, autocorrelation, convolution and/or adaptive filtering, neural network, a relation is determined between the crop intake distribution at the front of the header and the thickness distribution of the crop layer in the feeder. This relation is determined for various settings of operational parameters of the header. In this way, the thickness target distribution for the crop layer in the feeder can be calculated based on the estimated crop intake distribution at the front of the header.

In particular embodiments, the settings of the operational parameters of the header can be altered by known optimization techniques using the above mentioned relation so that the thickness target distribution for the crop layer in the feeder is closer to a desirable thickness target distribution of the crop layer in the feeder, whereby desirably typically means the thickness distribution of the crop layer in the feeder is so that it can be more efficiently processed in the combine, for example more efficiently threshed.

In a similar way as for thickness distribution, the invention may be performed for density distribution. In a preferred embodiment, it can additionally be performed for humidity distribution.

## Claims

1. Method for automatically controlling a harvesting parameter on a header (110) of a combine harvester (100) the combine harvester (100) further having a feeder and a downstream processing device (130) wherein crop of a harvest plant is cut by the header (110), transferred to the feeder within the header (110) and then transported to the processing device (130), the method comprising the following steps:
providing at least one sensor for detecting at least one crop property while the crop is in the feeder, each sensor being configured for outputting at least one crop property signal,
providing at least one actuator (440) on the combine harvester (100);
providing a control unit for receiving and processing the at least one crop property signal and for transmitting at least one control signal to the at least one actuator (440);
detecting at least one crop property in the feeder by the at least one sensor and outputting at least one corresponding crop property signal to the control unit;
processing the at least one crop property signal in the control unit;
transmitting at least one control signal from the control unit to the at least one actuator (440); and
executing the at least one control signal in the at least one actuator (440) so as to automatically control the harvesting parameter on the header (110);
wherein the at least one crop property is selected from the group consisting of:
thickness distribution of the crop layer across a cross-section of the feeder, and
density distribution of the crop layer across the cross-section of the feeder,
wherein any of the above crop properties is detectable by said at least one sensor; and
wherein the processing step in the control unit includes comparing the thickness and/or density distribution of the crop layer across a width of the feeder (Wf) with a target distribution.

2. Method according to claim 1 wherein the processing step in the control unit includes comparing the detected at least one crop property signal with an upper and/or lower threshold for the respective crop property.

3. Method according to one of the preceding claims further comprising providing an indication of the at least one property signal to an operator by the control unit.

4. Method according to one of the preceding claims wherein the processing step in the control unit further includes comparing a detected thickness or density with a target thickness or density.

5. Method according to claim 4 wherein the target thickness or density distribution is constant over the width of the feeder (Wf) and proportional to a crop intake.

6. Method according to one of the preceding claims wherein the executing step on the at least one actuator on the header includes at least one operation of the group consisting of:
adjusting an auger speed or a belt speed relating to the movement of the crop on the header (110) transverse to the driving direction of the combine harvester (100);
adjusting the clearance of a stripper plate;
adjusting the position of a crop guiding plate;
adjusting a feeder opening (410); and
adjusting a belt (230, 232, 238) speed relating to the longitudinal movement of the crop from the header (110) into the feeder.

7. Method according to claim 6 wherein any of the adjusting operations is executed at least partially on the right side and/or on the left side of the header (110).

8. Method according to any of the previous claims further comprising before the processing step in the control unit:
estimating a crop intake distribution over the width of the header (Wh) on the basis of data collected by a forward looking sensor such as one or more of a camera (160), a radar sensor and a lidar sensor, and/or on the basis of a position of the combine harvester (100) and satellite info and/or on the basis of geographic information about a current harvested area and a non-harvested area.

9. Method according to any of the previous claims, further comprising:
estimating the target distribution of the thickness and/or density of the crop layer over the width of the feeder (Wf) based on the estimated crop intake distribution over the width of the header (Wh).

10. Method according to claim 9, wherein the target distribution of the thickness and/or density of the crop layer over the width of the feeder (Wf) is estimated using a mathematical and/or experimental model of the crop flow in the header (110) to the feeder.

11. Method according to claim 9, wherein the target distribution of the thickness and/or density of the crop layer over the width of the feeder (Wf) is estimated based on data of previously measured distributions of thickness and/or density of the crop layer over the width of the feeder (Wf).

12. Method according to any of the previous claims further comprising:
monitoring the executing step on the at least one actuator (440) on the header (110) by detecting at least one actuator property by an actuator sensor and outputting at least one actuator property signal to the control unit.

13. A combine harvester (100) having a header (110), a feeder, a downstream processing device (130), wherein crop of a harvest plant is cut by the header (110), transferred to the feeder within the header (110) and then transported to the processing device (130), at least one sensor for detecting at least one crop property while the crop is in the feeder, at least one actuator (440) arranged to control the harvesting parameter on the header (110) and a control unit configured to cause the combine harvester to perform the method according to one of the previous claims.

## Patentansprüche

1. Verfahren zum automatischen Steuern eines Ernteparameters an einem Schneidwerk (110) eines Mähdreschers (100), wobei der Mähdrescher (100) ferner einen Förderer und eine nachgeordnete Verarbeitungsvorrichtung (130) aufweist, wobei Erntegut einer Erntepflanze durch das Schneidwerk (110) geschnitten, innerhalb des Schneidwerks (110) an den Förderer übergeben und dann zu der Verarbeitungsvorrichtung (130) transportiert wird, wobei das Verfahren die folgenden Schritte umfasst:
Bereitstellen mindestens eines Sensors zum Erfassen mindestens einer Eigenschaft des Ernteguts, während sich das Erntegut in dem Förderer befindet, wobei jeder Sensor konfiguriert ist, um mindestens ein Ernteguteigenschaftssignal auszugeben,
Bereitstellen mindestens eines Aktuators (440) an dem Mähdrescher (100);
Bereitstellen einer Steuereinheit zum Empfangen und Verarbeiten des mindestens einen Ernteguteigenschaftssignals und zum Übertragen mindestens eines Steuersignals an den mindestens einen Aktuator (440);
Erfassen mindestens einer Ernteguteigenschaft in dem Förderer durch den mindestens einen Sensor und Ausgeben mindestens eines entsprechenden Ernteguteigenschaftssignals an die Steuereinheit;
Verarbeiten des mindestens einen Ernteguteigenschaftssignals in der Steuereinheit;
Übertragen mindestens eines Steuersignals von der Steuereinheit an den mindestens einen Aktuator (440); und
Ausführen des mindestens einen Steuersignals in dem mindestens einen Aktuator (440), um den Ernteparameter an dem Schneidwerk (110) automatisch zu steuern;
wobei die mindestens eine Ernteguteigenschaft ausgewählt ist aus der Gruppe bestehend aus:
Dickenverteilung der Erntegutschicht über einen Querschnitt des Förderers, und
Dichteverteilung der Erntegutschicht über den Querschnitt des Förderers,
wobei jede der obigen Ernteguteigenschaften durch den mindestens einen Sensor erfassbar ist; und
wobei der Verarbeitungsschritt in der Steuereinheit das Vergleichen der Verteilung der Dicke und/oder Dichte der Erntegutschicht über eine Breite des Förderers (Wf) mit einer Sollverteilung umfasst.

2. Verfahren nach Anspruch 1, wobei der Verarbeitungsschritt in der Steuereinheit das Vergleichen des erfassten mindestens einen Ernteguteigenschaftssignals mit einem oberen und/oder unteren Schwellenwert für die jeweilige Ernteguteigenschaft umfasst.

3. Verfahren nach einem der vorhergehenden Ansprüche, ferner umfassend das Bereitstellen eines Hinweises auf das mindestens eine Eigenschaftssignal an einen Bediener durch die Steuereinheit.

4. Verfahren nach einem der vorhergehenden Ansprüche, wobei der Verarbeitungsschritt in der Steuereinheit ferner das Vergleichen einer erfassten Dicke oder Dichte mit einer Solldicke oder Solldichte umfasst.

5. Verfahren nach Anspruch 4, wobei die Solldicke oder Dichteverteilung über die Breite des Förderers (Wf) konstant und proportional zu einer Erntegutaufnahme ist.

6. Verfahren nach einem der vorhergehenden Ansprüche, wobei der Ausführungsschritt an dem mindestens einen Aktuator am Schneidwerk mindestens einen Vorgang aus der Gruppe bestehend aus Folgendem umfasst:
Einstellen einer Schneckengeschwindigkeit oder einer Bandgeschwindigkeit in Bezug auf die Bewegung des Ernteguts auf dem Schneidwerk (110) quer zur Fahrtrichtung des Mähdreschers (100);
Einstellen des Spiels einer Abstreiferplatte;
Einstellen der Position einer Erntegutleitplatte;
Einstellen einer Fördereröffnung (410); und
Einstellen einer Geschwindigkeit eines Bandes (230, 232, 238) in Bezug auf die Längsbewegung des Ernteguts von dem Schneidwerk (110) in den Förderer.

7. Verfahren nach Anspruch 6, wobei ein beliebiger der Einstellvorgänge zumindest teilweise auf der rechten Seite und/oder auf der linken Seite des Schneidwerks (110) ausgeführt wird.

8. Verfahren nach einem der vorhergehenden Ansprüche, ferner umfassend vor dem Verarbeitungsschritt in der Steuereinheit:
Schätzen einer Erntegutaufnahmeverteilung über die Breite des Schneidwerks (Wh) auf der Basis von Daten, die von einem vorausschauenden Sensor, wie einem oder mehreren von einer Kamera (160), einem Radarsensor und einem Lidarsensor, erfasst werden, und/oder auf der Basis einer Position des Mähdreschers (100) und Satelliteninformationen und/oder auf der Basis von geografischen Informationen über ein aktuell abgeerntetes Gebiet und ein noch nicht abgeerntetes Gebiet.

9. Verfahren nach einem der vorhergehenden Ansprüche, ferner umfassend:
Schätzen der Sollverteilung der Dicke und/oder Dichte der Erntegutschicht über die Breite des Förderers (Wf) auf der Grundlage der geschätzten Erntegutaufnahmeverteilung über die Breite des Schneidwerks (Wh).

10. Verfahren nach Anspruch 9, wobei die Sollverteilung der Dicke und/oder Dichte der Erntegutschicht über die Breite des Förderers (Wf) unter Verwendung eines mathematischen und/oder experimentellen Modells des Erntegutflusses im Schneidwerk (110) zum Förderer geschätzt wird.

11. Verfahren nach Anspruch 9, wobei die Sollverteilung der Dicke und/oder Dichte der Erntegutschicht über die Breite des Förderers (Wf) basierend auf Daten von zuvor gemessenen Verteilungen der Dicke und/oder Dichte der Erntegutschicht über die Breite des Förderers (Wf) geschätzt wird.

12. Verfahren nach einem der vorhergehenden Ansprüche, ferner umfassend:
Überwachen des Ausführungsschritts an dem mindestens einen Aktuator (440) an dem Schneidwerk (110) durch Erfassen mindestens einer Aktuatoreigenschaft durch einen Aktuatorsensor und Ausgeben mindestens eines Aktuatoreigenschaftssignals an die Steuereinheit.

13. Mähdrescher (100) mit einem Schneidwerk (110), einem Förderer, einer nachgeordneten Verarbeitungseinrichtung (130), wobei Erntegut einer Erntepflanze durch das Schneidwerk (110) geschnitten, innerhalb des Schneidwerks (110) an den Förderer übergeben und dann zu der Verarbeitungsvorrichtung (130) transportiert wird, mindestens einem Sensor zum Erfassen mindestens einer Eigenschaft des Ernteguts, während sich das Erntegut in dem Förderer befindet, mindestens einem Aktuator (440), der angeordnet ist, um den Ernteparameter an dem Schneidwerk (110) zu steuern, und einer Steuereinheit, die konfiguriert ist, um zu bewirken, dass der Mähdrescher das Verfahren nach einem der vorhergehenden Ansprüche durchführt.

## Revendications

1. Procédé permettant la commande automatique d'un paramètre de récolte sur une tête de coupe (110) d'une moissonneuse-batteuse (100), la moissonneuse-batteuse (100) présentant en outre un convoyeur et un dispositif de traitement en aval (130), dans lequel la culture d'une plante à récolter est coupée par la tête de coupe (110), transférée vers le convoyeur à l'intérieur de la tête de coupe (110), puis transportée vers le dispositif de traitement (130), le procédé comprenant les étapes suivantes :
la fourniture d'au moins un capteur destiné à détecter au moins une propriété de la culture pendant que la culture est dans le convoyeur, chaque capteur étant configuré pour émettre au moins un signal de propriété de culture,
la fourniture d'au moins un actionneur (440) sur la moissonneuse-batteuse (100) ;
la fourniture d'une unité de commande destinée à recevoir et traiter l'au moins un signal de propriété de culture et à transmettre au moins un signal de commande à l'au moins un actionneur (440) ;
la détection d'au moins une propriété de culture dans le convoyeur par l'au moins un capteur et l'émission d'au moins un signal de propriété de culture correspondant vers l'unité de commande ;
le traitement de l'au moins un signal de propriété de culture dans l'unité de commande ;
la transmission d'au moins un signal de commande de l'unité de commande à l'au moins un actionneur (440) ; et
l'exécution de l'au moins un signal de commande dans l'au moins un actionneur (440) de manière à commander automatiquement le paramètre de récolte sur la tête de coupe (110) ;
dans lequel l'au moins une propriété de culture est choisie dans le groupe constitué par :
la répartition d'épaisseur de la couche de culture sur une section transversale du convoyeur, et
la répartition de densité de la couche de culture sur la section transversale du convoyeur,
dans lequel l'une quelconque des propriétés de culture ci-dessus est détectable par ledit au moins un capteur ; et
dans lequel l'étape de traitement dans l'unité de commande comporte la comparaison de la répartition d'épaisseur et/ou de densité de la couche de culture sur une largeur du convoyeur (Wf) à une répartition cible.

2. Procédé selon la revendication 1, dans lequel l'étape de traitement dans l'unité de commande comporte la comparaison de l'au moins un signal de propriété de culture détecté à un seuil supérieur et/ou inférieur relatif à la propriété de culture respective.

3. Procédé selon l'une des revendications précédentes, comprenant en outre la fourniture d'une indication de l'au moins un signal de propriété à un opérateur par l'unité de commande.

4. Procédé selon l'une des revendications précédentes, dans lequel l'étape de traitement dans l'unité de commande comporte en outre la comparaison d'une épaisseur ou d'une densité détectée à une épaisseur ou une densité cible.

5. Procédé selon la revendication 4, dans lequel la répartition d'épaisseur ou de densité cible est constante sur la largeur du convoyeur (Wf) et proportionnelle à une prise de culture.

6. Procédé selon l'une des revendications précédentes, dans lequel l'étape d'exécution sur l'au moins un actionneur sur la tête de coupe comporte au moins une opération du groupe constitué par :
le réglage d'une vitesse de vis sans fin ou d'une vitesse de courroie se rapportant au mouvement de la culture sur la tête de coupe (110), mouvement transversal à la direction d'entraînement de la moissonneuse-batteuse (100) ;
le réglage du jeu d'une plaque d'extraction ;
le réglage de la position d'une plaque de guidage de culture ;
le réglage d'une ouverture de convoyeur (410) ; et
le réglage d'une vitesse de courroie (230, 232, 238), laquelle vitesse se rapporte au mouvement longitudinal de la culture depuis la tête de coupe (110) jusqu'au convoyeur.

7. Procédé selon la revendication 6, dans lequel l'une quelconque des opérations de réglage est exécutée au moins partiellement sur le côté droit et/ou sur le côté gauche de la tête de coupe (110).

8. Procédé selon l'une quelconque des revendications précédentes, comprenant en outre, avant l'étape de traitement dans l'unité de commande :
l'estimation d'une répartition de prise de culture sur la largeur de la tête de coupe (Wh) en fonction des données collectées par un capteur à portée frontale tel qu'un ou plusieurs éléments parmi une caméra (160), un capteur radar et un capteur LIDAR, et/ou en fonction d'une position de la moissonneuse-batteuse (100) et de données satellites et/ou en fonction de données géographiques concernant une superficie où la récolte est en cours et une superficie non récoltée.

9. Procédé selon l'une quelconque des revendications précédentes, comprenant en outre :
l'estimation de la répartition cible de l'épaisseur et/ou de la densité de la couche de culture sur la largeur du convoyeur (Wf) en fonction de la répartition estimée de la prise de culture sur la largeur de la tête de coupe (Wh).

10. Procédé selon la revendication 9, dans lequel la répartition cible de l'épaisseur et/et/ou de la densité de la couche de culture sur la largeur du convoyeur (Wf) est estimée à l'aide d'un modèle mathématique et/ou expérimental du flux de culture dans la tête de coupe (110) vers le convoyeur.

11. Procédé selon la revendication 9, dans lequel la répartition cible de l'épaisseur et/ou de la densité de la couche de culture sur la largeur du convoyeur (Wf) est estimée en fonction des données des répartitions précédemment mesurées d'épaisseur et/ou de densité de la couche de culture sur la largeur du convoyeur (Wf).

12. Procédé selon l'une quelconque des revendications précédentes, comprenant en outre :
la surveillance de l'étape d'exécution sur l'au moins un actionneur (440) sur la tête de coupe (110) en détectant au moins une propriété d'actionneur par un capteur d'actionneur et en émettant au moins un signal de propriété d'actionneur vers l'unité de commande.

13. Moissonneuse-batteuse (100) présentant une tête de coupe (110), un convoyeur, un dispositif de traitement en aval (130), dans laquelle la culture d'une plante à récolter est coupée par la tête de coupe (110), transférée vers le convoyeur à l'intérieur de la tête de coupe (110), puis transportée vers le dispositif de traitement (130), au moins un capteur destiné à détecter au moins une propriété de culture lorsque la récolte est dans le convoyeur, au moins un actionneur (440) agencé pour commander le paramètre de récolte sur la tête de coupe (110) et une unité de commande configurée pour amener la moissonneuse-batteuse à mettre en œuvre le procédé selon l'une des revendications précédentes.
